# EUROPÄISCHE PATENTANMELDUNG

(11) **EP 4 220 180 A2**
(43) Veröffentlichungstag der Anmeldung: **02.08.2023**
(21) Anmeldenummer: 23163356.1
(22) Anmeldetag: 24.07.2015
(51) Int. Cl.: G01N 35/04, G01N 35/10, G01N 35/00, G01N 1/28, B01L 3/00, B01L 3/02, B04B 5/04, B04B 11/04

(54) **ANORDNUNG ZUR VORBEREITUNG EINER VIELZAHL VON PROBEN FÜR EIN ANALYTISCHES VERFAHREN**

(30) Priorität: 29.07.2014 DE 102014110684; 29.07.2014 DE 102014110682; 29.07.2014 DE 102014110691; 29.07.2014 DE 102014110680
(62) Teilanmeldung aus: 15744534.7
(71) Anmelder: Gerstel, Joachim, 47445 Moers (DE)
(72) Erfinder: Gerstel, Joachim, 47445 Moers (DE)
(74) Vertreter: Weisse, Renate

(57) **Zusammenfassung**

Eine Anordnung zum Aufnehmen von Probenflüssigkeit aus einem Probenbehälter und Zuführen in ein Analysegerät, enthaltend: eine Saugvorrichtung; und eine mit der Saugvorrichtung verbundene Pipette oder Nadel; ist dadurch gekennzeichnet, dass die Pipette oder Nadel im Inneren mit einem Filter versehen ist; ein Depot für eine Vielzahl von unbenutzten Pipetten oder Nadeln vorgesehen ist; und Mittel zum Austauschen der Pipette oder Nadel nach dem Aufnehmen von Probenflüssigkeit und Zuführen in ein Analysengerät gegen eine unbenutzte Pipette oder Nadel aus dem Depot.

## Beschreibung

### Technisches Gebiet

Die Erfindung betrifft eine Anordnung zum Aufnehmen von Probenflüssigkeit aus einem Probenbehälter und Zuführen in ein Analysegerät, enthaltend eine Saugvorrichtung und eine mit der Saugvorrichtung verbundene Pipette oder Nadel.

Die Erfindung betrifft ferner ein Probeneintragssystem zum Einbringen einer auf einem blattförmigen Probenträger vorliegenden Probe in einen leeren oder vorbereiteten Probenbehälter mit Mitteln zum Schneiden des blattförmigen Probenträgers.

Die Erfindung betrifft ferner eine Anordnung zur Vorbereitung einer Vielzahl von Proben für ein analytisches Verfahren, enthaltend
(a) ein Karussell mit einem festen Gehäuse und beweglichen Aufnahmen für Probenbehälter;
(b) eine Steuerung zur Steuerung der Aufnahmen in dem Karussell; und
(c) eine Probenentnahme-Einrichtung zur Bereitstellung der Probe für das analytische Verfahren.

Proben, beispielsweise organische Proben wie Blut, Urin, Serum, Milch, Honig und dergleichen werden im Labor auf das Vorhandensein von bestimmten Bestandteilen oder Schadstoffen und deren Menge untersucht. Hierfür werden bekannte Verfahren der instrumentellen Analytik eingesetzt, beispielsweise chromatographische, spektrometrische oder optische Analyseverfahren. Gewöhnlich liegen die zu untersuchenden Bestandteile in einer Probenmatrix vor, welche zu Störungen führen kann. Einige der zu untersuchenden Bestandteile müssen verändert werden, beispielsweise durch Veränderung der Temperatur, des Drucks oder durch Zugabe von Reagenzien, bevor sie einer Analyse zugänglich sind. Die Probenvorbereitung ist daher ein fester Bestandteil jedes instrumentellen Analyseverfahrens.

Ein Beispiel für die Analyse von Blut ist das Screening von Blutproben Neugeborener zur Untersuchung auf Erbkrankheiten. Bei der DBS-Analyse (Dried Blood Spots-Analyse) werden Proben als Tropfen auf Karten aus Filterpapier aufgebracht. Hierzu ist der Probenträger mit einer Markierung versehen. Die Probe trocknet auf dem Probenträger. Bei instrumentellen Analyseverfahren erfolgt die eigentliche Analyse von Proben gewöhnlich automatisch oder halbautomatisch. Die Probe wird dem Gerät zur Messung zugeführt und das Gerät liefert Daten, welche entweder die Art und Menge der zu untersuchenden Probenbestandteile repräsentieren oder Rückschlüsse auf Art und/oder Menge durch Auswertung der Daten zulassen. Solche Daten sind beispielsweise chromatographische Retentionszeiten, NMR-Spektren, Massenspektren, Absorptionsoder Emissionsspektren und dergleichen mehr.

Während analytische Messungen automatisch oder halbautomatisch erfolgen, erfordert die Probenvorbereitung eine Vielzahl von chemischen oder physikalischen Maßnahmen, die in der Regel von Hand ausgeführt werden. Beispiele für derartige Maßnahmen sind Kühlen, Erwärmen, Rühren, Rückflusskochen, Zuführen von Reagenzien und Lösungsmitteln, Abtrennen von Reagenzien durch Zentrifugieren oder Filtern, Vortexen und dergleichen mehr.

Zum Verschließen der Probenbehälter werden üblicherweise Stopfen verwendet. Diese sind teuer.

### Stand der Technik

Es sind Probenvorbereitungsgeräte bekannt, bei denen mehrere Probenbehälter in einer gemeinsamen Halterung angeordnet sind. Über der Halterung sind Pipetten mit Dosiersystemen angeordnet, mit denen ein Reagenz zugeführt werden kann. Die Halterung kann als Ganzes gehandhabt, etwa transportiert oder gelagert werden.

Es sind Autosampler für die Graphitofen-Atomabsorptionsspektroskopie bekannt, bei denen eine Vielzahl von fertig vorbereiteten Proben in Probenbehältern in einem Karussell vorgesehen sind. Das Karussell rotiert, so dass immer eine ausgewählte Probe unter einer Pipette positioniert werden kann, mit welcher die Dosierung erfolgt.

DE 20 2011 110 050 U1 offenbart eine Anordnung zur Erkennung von getrockneten Proben auf einem Träger. Die Probe wird von dem Träger extrahiert und der hierfür verwendete Extraktionskopf gereinigt.

Unter der Produktbezeichnung "Panthera Puncher 9" vertreibt das Unternehmen PerkinElmer, Inc. eine Anordnung zum Ausstanzen von Proben. Zur Analyse wird die markierte Stelle mit der Probe ausgestanzt und mit dem ausgestanzten Teil des Probenträgers in einen Probenbehälter überführt. Entsprechend bildet der Probenträger eine unerwünschte Probenmatrix. Nachteilig bei dem bekannten Verfahren ist es, dass das zum Stanzen verwendete Schneidmittel nacheinander verschiedene Proben ausstanzt, was zur Kontamination von Proben mit Probenpartikeln der vorgehenden Proben führen kann. Daher ist eine aufwändige Reinigung erforderlich.

Wenn eine Probe nicht oder nicht vollständig an der markierten Stelle auf den Probenträger aufgebracht wurde, ist eine Nachjustierung von Hand erforderlich oder die die Probe wird nur teilweise ausgestanzt. Dann liegt weniger Probenmasse vor, wodurch sich die Nachweisgrenze verschlechtern kann.

Nachteilig bei der Probenvorbereitung ist es, dass jede Probe einzeln und individuell von Hand vorbereitet werden muss, auch wenn halbautomatische Verfahren einzelne Schritte für mehrere Proben gleichzeitig durchführen. Für die Durchführung einer Vielzahl von Schritten muss die Probe in verschiedene Probenbehälter überführt werden. Es werden Lösungsmittel und Reagenzien zugesetzt. Dabei können sich die Volumen durch Verluste ändern und es besteht die Gefahr der Kontamination der Probe. Außerdem ist die Dosierung von Hand ungenauer als eine automatische Dosierung. Die Probenvorbereitung erfordert viel Zeit. Das mit der Probenvorbereitung betraute Personal braucht erhebliche Fachkenntnisse und ermüdet mit der Zeit. Die Anzahl der Proben, die in einem Labor für die Analyse vorbereitet werden kann, ist daher limitiert.

### Offenbarung der Erfindung

Es ist Aufgabe der Erfindung, eine Anordnung der eingangs genannten Art zu schaffen, welche die Vorbereitung von Proben vereinfacht, beschleunigt und die Richtigkeit der Analysenergebnisse erhöht. Es ist ferner Aufgabe der Erfindung eine Vorrichtung zur Probenvorbereitung zu schaffen, die einen hohen Durchsatz an Proben bei geringem Personaleinsatz erlaubt.

Erfindungsgemäß wird die Aufgabe bei einer Anordnung der eingangs genannten Art dadurch gelöst, dass
(c) die Pipette oder Nadel im Inneren mit einem Filter versehen ist;
(d) ein Depot für eine Vielzahl von unbenutzten Pipetten oder Nadeln vorgesehen ist; und
(e) Mittel zum Austauschen der Pipette oder Nadel nach dem Aufnehmen von Probenflüssigkeit und Zuführen in ein Analysengerät gegen eine unbenutzte Pipette oder Nadel aus dem Depot.

Erfindungsgemäß wird die Probe nicht nur entnommen, sondern gleichzeitig gefiltert. Natürlich können Feststoffe an der Zentrifuge aus der Probe abgetrennt werden. Im Überstand verbleibende Schwebeteilchen und Mikropartikel können aber an der Nadel herausgefiltert werden, so dass die Probe in reinem flüssigen Zustand in das Analysegerät geleitet werden kann. Dies ist besonders bei HPLC vorteilhaft. Eine Cross-Kontamination durch kontaminierte Nadeln wird durch die Verwendung einer unbenutzten Nadel aus dem Depot vermieden.

Der Filter kann in der Pipette oder Nadel durch ein Sinterverfahren angesintert sein. Es kann aber auch vorgesehen sein, dass die Pipette oder Nadel im Bereich des Filters eine Wandung verringerter Wandstärke aufweist. Dann kann der Filter ein Filtermaterial im Bereich der Wandung verringerter Wandstärke aufweisen und die darunterliegende Öffnung kann zugekrimpt sein. Es versteht sich, dass die darunterliegende Öffnung auch auf andere Weise ausgestaltet ist, welche das Filtermaterial in seiner Position hält.

Bei einer weiteren Ausgestaltung der Erfindung sind optische Mittel zur Erfassung der Tiefe des flüssigen Überstands oberhalb von Feststoff im Probenbehälter und Mittel zum Steuern der Eintauchtiefe eines an der Probenentnahme-Einrichtung vorgesehenen Endes nach Maßgabe der Tiefe des flüssigen Überstandes. Die optischen Mittel zur Erfassung der Tiefe des flüssigen Überstands oberhalb von Feststoff im Probenbehälter können insbesondere eine Videokamera mit bildauswertenden Mitteln umfassen.

An der Anordnung kann ein Lesegerät vorgesehen sein zum Auslesen von Identifikationsdaten und/oder Daten zur Probe und/oder durchzuführenden Probenvorbereitung aus einem Barcode, RFID-Speicher oder einem anderen an der Probe oder dem Probenbehälter vorgesehenen Datenspeicher. Es wird also nicht nur die Identität der Proben erfasst, sondern auch das Verfahren, nach dem die Probe behandelt werden soll. Auf diese Weise können unterschiedliche Probenarten mit mehr oder weniger beliebig beliebiger Reihenfolge und Probenvorbereitung in die Anordnung bzw. das Karussell eingeführt werden. Es kann auch die gleiche Probe mit unterschiedlichen Verfahren zur Probenvorbereitung eingesetzt werden. Die Steuerung kennt zu jedem Zeitpunkt die Proben und das Verfahren und kann so den Weg der Probe durch die erfindungsgemäße Anordnung im Zusammenspiel mit dem Weg der anderen Proben optimieren.

Bei einer Ausgestaltung der Erfindung ist eine Schnittstelle zum Anschließen einer HPLC-Säule, Gaschromatographiesäule oder eines anderen Analysegerätes hinter der Probenentnahme-Einrichtung vorgesehen. Insbesondere kann eine gemeinsame Steuerung vorgesehen sein, so dass unmittelbar nach Beendigung einer Analyse und ggf. Reinigung die nächste Probe bereitgestellt werden kann.

Vorzugsweise ist weiterhin eine Öffnung im Bereich der an der Zentrifuge vorgesehenen Aufnahmen für Probenbehälter im Karussellboden vorgesehen, über welche eine Verbindung zu einem Abfallbehälter herstellbar ist. Der Probenbehälter einer bereits entnommenen Probe kann auf diese Weise automatisch entsorgt werden.

Die Aufgabe wird weiterhin dadurch gelöst, dass
(d) eine oder mehrere Stationen zur Probenvorbereitung an dem Karussell vorgesehen sind, an denen die Aufnahmen für Probenbehälter des Karussells positionierbar sind;
(e) eine Zentrifuge mit paarweise gegenüberliegenden Aufnahmen für Probenbehälter vorgesehen ist, und
(f) die Aufnahmen für Probenbehälter an der Zentrifuge beweglich angeordnet sind und die Bewegungen derart steuerbar sind, dass eine Überführung eines Probenbehälters zwischen einer Aufnahme im Karussell und einer Aufnahme in der Zentrifuge bewirkbar ist,
(g) wobei die Steuerung durch die gleiche Steuerung erfolgt, die auch zur Steuerung des Karussells vorgesehen ist.

Dabei können die Aufnahmen für Probenbehälter kreisförmig auf der Innenseite des Karussells angeordnet sein und die Zentrifuge im Mittenbereich des Karussells. Die Aufnahmen für Probenbehälter an der Zentrifuge können von ausfahrbaren Greifarmen gebildet sein, deren Winkellage bezüglich der Rotationsachse der Zentrifuge einstellbar ist. Mit einer solchen Anordnung wird eine Probenvorbereitungsanordnung geschaffen, die kompakt ist, kostengünstig herstellbar und eine vollautomatische Probenvorbereitung erlaubt. An den Stationen zur Probenvorbereitung können die einzelnen Vorbereitungsschritte durchgeführt werden, ohne dass die Probe zwischendurch in einen anderen Behälter überführt werden muss. Die Probenbehälter können mit den Greifarmen an der Zentrifuge in jede Winkellage gebracht werden. Das bedeutet, dass Probenbehälter unabhängig von ihrer Lage im Karussell mit den Greifarmen der Zentrifuge jeweils zur nächsten Station befördert werden können. Wenn eine Station von einer Probe nicht angefahren werden soll, kann die Probe diese Station überspringen und andere Proben quasi "überholen". Dadurch wird die Auslastung der einzelnen Stationen verbessert, die Probenvorbereitung beschleunigt und der Durchsatz erhöht. Die doppelte Verwendung einer Zentrifuge als Probenvorbereitungsstation und gleichzeitig als Positioniermittel ermöglicht es auch ausgewählte Proben mit einer höheren Priorität zu behandeln. Das macht insbesondere bei verderblichen Proben Sinn, die möglichst schnell analysiert werden sollen.

Die Probenbehälter werden in die Aufnahmen im Karussell der erfindungsgemäßen Anordnung eingesetzt. Das kann mit oder ohne Probe erfolgen. Die Probe kann auch nach dem Einsetzen in die Aufnahme in den Probenbehälter eingeführt werden. Danach verlässt die Probe den Probenbehälter erst für die Analyse und verbleibt während der gesamten Probenvorbereitung im gleichen Probenbehälter.

Anschließend werden die Proben mit dem Karussell an den einzelnen Stationen vorbeibewegt. Hierfür bewegt sich das Karussell in dem Gehäuse.

Bei einer bevorzugten Ausgestaltung der Erfindung ist ein Probeneintragssystem vorgesehen, bei dem die Probe in einen leeren oder vorbereiteten Probenbehälter im Karussell eingebracht wird. Das Probeneintragssystem bildet also eine erste Station zur Probenvorbereitung.

Die Probe kann als Feststoff oder als Flüssigkeit in den Probenbehälter überführt werden.

Es ist ferner Aufgabe der Erfindung, eine Vorrichtung der eingangs genannten Art zu schaffen, mit der ein Probenbehälter für die Probenvorbereitung kostengünstig und automatisch verschlossen werden kann.

Bei einer Ausgestaltung der Erfindung ist eine Vorrichtung zum Verschließen eines in einer Aufnahme im Karussell befindlichen Probenbehälters mit einer Folie aus einem Folienspender vorgesehen. Die Vorrichtung kann umfassen:
(a) Mittel zum Platzieren von Folie aus einem Folienspender oberhalb des Probenbehälters;
(b) einen im Bereich oberhalb des Probenbehälters beweglich angeordneten Stempel; und
(c) eine Heizung zum Beheizen des Stempels im Bereich des oberen Randes des Probenbehälters, so dass die Folie beim Aufdrücken des Stempels auf den Rand aufgeschweißt wird;
(d) wobei der Stempel beim Verschließen des Probenbehälters Druck auf den Probenbehälter ausübt.

Während des Aufschweißens löst sich der Teil der Folie im Öffnungsbereich des Probenbehälters von der übrigen Folie. Die Folie braucht also nicht genau an die Größe und die Form der Öffnung angepasst werden. Es reicht, wenn Folie blattweise oder in größeren Stücken vorliegt.

Vorzugsweise weist der Folienspender eine Rolle auf, auf welcher die Folie aufgerollt ist. Dann kann viel Folie bereitgestellt werden. Der Wechsel einer Rolle ist vergleichsweise einfach. Die Folie kann in gewünschten Maß abgerollt werden.

Vorteilhafterweise ist der Vortex-Mischer fest unterhalb des Stempels angeordnet und der Probenbehälter ist mit dem Halter in den Bereich zwischen Stempel und Vortex-Mischer bewegbar. Dabei kann vorgesehen sein, dass der Probenbehälter mit dem Stempel auf den Vortex-Mischer aufdrückbar ist. Es wird also gleichzeitig eine Folie aufgeschweißt und der Probenbehälter auf den Vortex-Mischer aufgedrückt. Es versteht sich, dass die Folie auch ohne Mischung aufgebracht werden kann oder der Druck des Stempels ohne Folie ausgeübt werden kann.

Weiterhin können Mittel zum Austreiben von Lösungsmittel aus dem Probenbehälter mittels eines Gases vorgesehen sein. Dabei kann das Lösungsmittel mittels zweier durch die Folie in den Probenbehälter einsteckbarer Hohlnadeln ausgetrieben werden. Durch eine Nadel wird ein neutrales Gas, zum Beispiel Stickstoff, in den Probenbehälter eingeführt. Durch die andere Nadel wird lösungsmittelhaltiges Gas abgesaugt.

Schließlich ist es Aufgabe der Erfindung eine Vorrichtung der eingangs genannten Art zu schaffen, welche das Überführen von Proben von blattförmigen Probenträgern in einen Probenbehälter vereinfacht und Kontamination vermeidet.

Es gibt Proben, die als getrockneter Bluttropfen oder ähnliches auf einem blattförmigen Träger vorliegen. Solche Proben können mit dem Träger ausgestanzt oder ausgeschnitten werden und fallen dann in den Probenbehälter.

Es kann aber bei einem Probeneintragssystem zum Einbringen einer auf einem blattförmigen Probenträger vorliegenden Probe in einen leeren oder vorbereiteten Probenbehälter mit Mitteln zum Schneiden des blattförmigen Probenträgers der eingangs genannten Art auch vorgesehen sein:
(a) eine Düse;
(b) eine an die Düse angeschlossene Hochdruckfluidquelle; und
(c) Mittel zum Steuern einer Bewegung der Düse und/oder des Probenträgers derart, dass ausgewählte Bereiche des blattförmigen Probenträgers ausgeschnitten werden.

Bei dieser Anordnung wird der Träger mittels eines Hochdruckstrahls ausgeschnitten. Es ist also keine Schneide erforderlich. Cross-Over-Kontamination von Probe zu Probe an der Schneide wird vermieden. Das Hochdruckfluid kann wenigstens ein im Probenvorbereitungsverfahren verwendetes Fluid enthalten. Das hat den Vorteil, dass keine unnötigen Flüssigkeiten eingesetzt werden, die im späteren Probenvorbereitungsverfahren mit Mühe wieder entfernt werden müssen.

Die Stelle des Probenträgers mit der Probe kann vollständig ausgeschnitten und in den Probenbehälter überführt werden. Alternativ kann die Stelle des Probenträgers mit der Probe teilweise ausgeschnitten werden und Mittel vorgesehen sein, mit denen der ausgeschnittene Teil nach unten in den Bereich des Probenbehälters geklappt wird, und Mittel zum Abspülen der Probe vom Probenträger mit dem Fluid aus der Hochdruckfluidquelle in den Probenbehälter. Dann wird eine durch den Probenträger erzeugte Matrix vermieden. Insbesondere können die Mittel zum Abspülen der Probe einen Sprühkopf umfassen, mit dem das Fluid aus der Hochdruckfluidquelle auf die Probe aufgesprüht wird. Dann braucht der Druck des Fluids nicht reduziert werden.

Bei einer besonders bevorzugten Ausgestaltung der Erfindung ist ein Scanner vorgesehen, mit welchem die Farbe, der Trocknungsgrad, die Lage der Probe, die Ausdehnung der Probe und/oder andere optische detektierbare Eigenschaften der Probe erfassbar ist. Der Probenträger und die Düse mit dem Hochdruckstrahl können alleine oder beide so bewegt werden, dass die Probe genau ausgeschnitten wird. Es kann der Probenträger unter einer feststehenden Düse bewegt werden. Hierzu kann die gesamte Halterung für Probenträger auf einem x-y-Tisch angeordnet sein. Die Bewegung wird von der Steuerung gesteuert. Alternativ wird die Düse bewegt. Es ist auch möglich, beide Komponenten zu bewegen. Zur Erfassung der Art und des Trocknungsgrades der Probe kann ein Bild der Probe mit verschiedenen Wellenlängen des Spektrums aufgenommen werden. Dadurch wird vermieden, dass unerwünschte Proben in das Analysesystem gelangen. Die gleiche Kamera kann zur Erfassung von Identifizierungsdaten, etwa einem Barcode, verwendet werden.

Bei der Probennahme und Platzierung auf dem Träger ist es nicht leicht immer den genauen Punkt zu treffen, der ausgeschnitten wird. Diese Platzierungs-Toleranzen können beim Ausschneiden mit einer gesteuerten Bewegung berücksichtigt werden. Die gesamte Probe gelangt in den Probenbehälter. Es versteht sich, dass bei einer solchen Anordnung auch gezielt nur ein Teil der Probe ausgeschnitten und ggf. abgespült werden kann, wenn ein Rest etwa für andere Analysen oder als Referenz verbleiben soll.

Vorzugsweise ist ein Gehäuseturm vorgesehen, in dem die Probenträger mit Abstandshaltern gestapelt ablegbar sind und Mittel zum Bewegen eines Probenträgers aus einer Öffnung im Gehäuseturm in den Bereich der Düse. Dabei kann die Öffnung im Gehäuseturm am unteren Ende vorgesehen sein und der Gehäuseturm eine obere Öffnung zum Einlegen von weiteren Probenträgern aufweisen.

Als weitere Station können ein oder mehrere Dosiersysteme zum Dosieren von Reagenzien zur Probenvorbereitung aus einem Reservoir vorgesehen sein, wobei der Dosierausgang des Dosiersystems fest oberhalb der in dem Karussell beweglichen Probenbehälter angeordnet ist, so dass das Reagenz individuell in ausgewählte Probenbehälter dosierbar ist. Üblicherweise umfassen derartige Dosiersysteme eine Pumpe, die ein gewünschtes Dosiervolumen des Reagenzes dosiert. Die Pumpe kann mit der Steuerung individuell gesteuert werden. Derartige Reagenzien können Fällmittel, Lösungsmittel, Matrixmodifier, Kontrastmittel und dergleichen sein.

Bei einer weiteren Ausgestaltung der Erfindung ist eine Heizung zum Heizen eines oder mehrerer Probenbehälter als Station am Karussell vorgesehen.

Die Anordnung arbeitet voll automatisch und erfordert kein Personal mit besonderen Fachkenntnissen. Es müssen lediglich die Proben angemessen im Halter bereitgestellt werden. Die einzelnen Schritte und Verfahren werden vorab gespeichert und von der Steuerung ausgeführt.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: ist eine perspektivische Darstellung einer Anordnung zur Probenvorbereitung mit mehreren Stationen;
- Fig.2: ist eine perspektivische Darstellung des Probenkarussells und der Zentrifuge im Ruhezustand, die in einer Anordnung nach Figur 1 verwendet werden.
- Fig.3: zeigt die Zentrifuge aus der Anordnung nach Figur 1 bis 2 während des Zentrifugiervorgangs im Detail.
- Fig.4: zeigt ein vollständiges Probeneintragssystem für getrocknete Proben auf einem blattförmigen Träger.
- Fig.5: zeigt das Probeneintragssystem aus Figur 4 im Detail.
- Fig.6: zeigt drei Dosiersysteme aus der Anordnung aus Figur 1 zum Dosieren von Reagenzien zur Probenvorbereitung aus einem Reservoir.
- Fig.7: zeigt eine Anordnung zum Austreiben von Lösungsmittel in der Anordnung aus Figur 1 in Ruhestellung.
- Fig.8: zeigt die Anordnung aus Figur 7 während des Austreibens.
- Fig.9: ist eine perspektivische Darstellung eines Folienspenders aus der Anordnung aus Figur 1 zum Verschließen eines in einer Aufnahme im Karussell befindlichen Probenbehälters mit einer Folie.
- Fig. 10: ist ein Querschnitt durch den Folienspender aus Figur 9.
- Fig. 11: zeigt eine Heizung in der Anordnung aus Figur 1.
- Fig. 12: zeigt die Heizung aus Figur 11 während des Heizens.
- Fig. 13: zeigt eine Probenentnahme-Einrichtung aus der Anordnung aus Figur 1.
- Fig.14: ist ein Querschnitt durch eine Hohlnadel zur Probenentnahme mit einem Filter.
- Fig.15: zeigt eine Kamera zur Ermittlung der Höhe des flüssigen Überstandes im Probenbehälter in einer ersten Stellung.
- Fig.16: zeigt die Kamera aus Figur 15 in einer zweiten Stellung.
- Fig.17: zeigt das Drehventil der Probenentnahme-Einrichtung für eine Anordnung aus Figur 1 in einer ersten Stellung.
- Fig.18: zeigt das Drehventil der Probenentnahme-Einrichtung für eine Anordnung aus Figur 1 in einer zweiten Stellung.
- Fig.19: zeigt das Drehventil der Probenentnahme-Einrichtung für eine Anordnung aus Figur 1 in einer dritten Stellung, der Spülstellung.

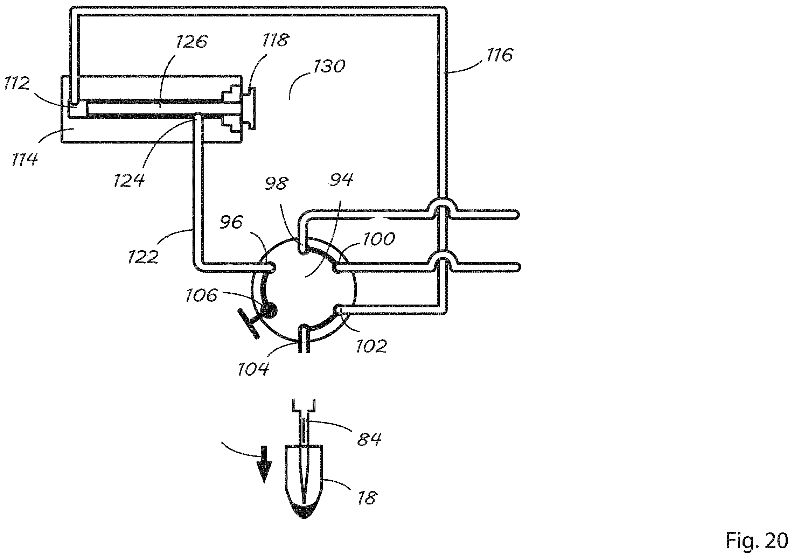

- Fig.20: illustriert, wie die Nadel und der Probenbehälter nach der Probenentnahme entsorgt werden.
- Fig.21: illustriert die Entsorgung des Probenbehälters nach der Probenentnahme im Boden des Gehäuses.

### Beschreibung des Ausführungsbeispiels

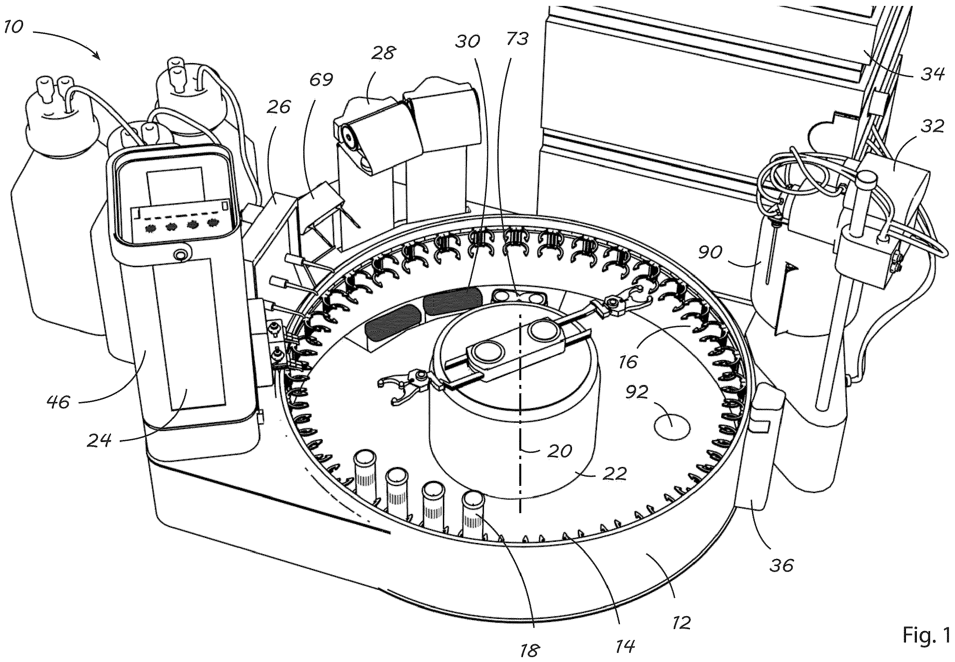

Figur 1 zeigt eine Anordnung zur Probenvorbereitung, die allgemein mit 10 bezeichnet ist. Die Anordnung 10 weist ein im Wesentlichen kreisförmiges Gehäuse 12 mit einem Karussell 14 auf. Das Karussell 14 besteht aus einem Ring mit einer Vielzahl von Aufnahmen 16 für Probenbehälter 18. Die Probenbehälter 18 können in radialer Richtung in hierfür vorgesehene Öffnungen der Aufnahmen 16 eingeklipst werden. Alternativ können die Probenbehälter 18 von oben in die Aufnahmen 16 eingeführt werden. Das Karussell 14 kann um eine Mittenachse 20 rotiert werden. Hierfür ist ein Antrieb und eine Steuerung 34 vorgesehen, die hier der Einfachheit halber nicht dargestellt sind.

Im Mittenbereich des Karussells ist eine Zentrifuge 22 angeordnet. Die Zentrifuge 22 rotiert ebenfalls um die Mittenachse 20. Außen am Gehäuse 12 sind verschiedene Stationen zur Probenvorbereitung, einschließlich dem Probeneintrag und der Probenentnahme angeordnet. Zu den Stationen gehören ein Probeneintragssystem 24 für getrocknete Proben auf einem blattförmigen Träger. Im Uhrzeigersinn dahinter sind drei Dosiersysteme 26 zum Dosieren von Reagenzien zur Probenvorbereitung aus einem Reservoir angeordnet. Die im Uhrzeigersinn dahinter liegende Station 28 ist ein Folienspender zum Verschließen eines in einer Aufnahme 16 im Karussell 14 befindlichen Probenbehälters 18 mit einer Folie. Unterhalb des Folienspenders 28 ist eine Vortex-Station 30 angeordnet. Die Vortex-Station 30 ist in Figuren, 9 und 10 gut zu erkennen. Auf der dem Probeneintragssystem 24 gegenüberliegenden Seite ist eine Probenentnahme-Einrichtung 32 angeordnet. Die entnommenen, fertig vorbereiteten Proben werden anschließend einem Analysegerät zugeführt, das im vorliegenden Ausführungsbeispiel von einer HPLC-Säule mit Detektor gebildet ist (nicht dargestellt).

Alle oben beschriebenen Stationen und Geräte sind mit einer gemeinsamen Steuerung (nicht dargestellt) verbunden. Die Steuerung steuert alle erforderlichen Antriebe und empfängt und speichert Daten und Ergebnisse. Einstellungen können entweder direkt an der Station oder über ein User-Interface an der Steuerung vorgenommen werden. Dort können auch Probenvorbereitungsverfahren mit Art und Dauer der einzelnen Probenvorbereitungsschritte eingegeben und abgespeichert werden.

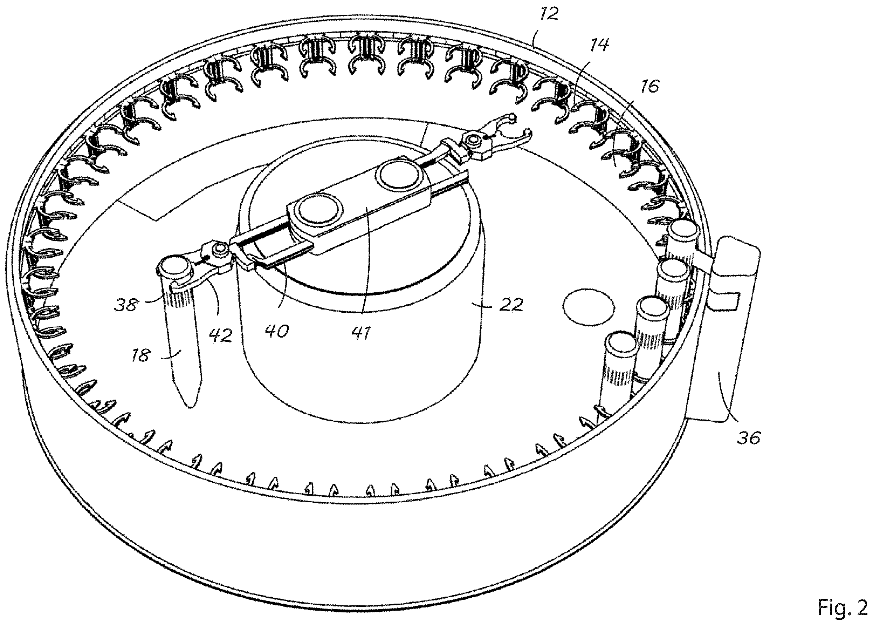

Figur 2 zeigt das Gehäuse 12 noch einmal im Detail. Das Gehäuse 12 ist mit einem transparenten Deckel (nicht dargestellt) verschließbar, so dass eine Kontamination der Proben vermieden wird. Außerdem ist die Umgebungsluft vor verdampfenden Lösungsmitteln etc. geschützt.

Die Probenbehälter 18 werden in den Aufnahmen 16 gehalten. Jeder Probenbehälter 18 hat die Form eines Reagenzglases und ist mit einem Barcode 38 versehen, der als bedruckter Aufkleber auf dem Probenbehälter 18 aufgeklebt ist. Außen am Gehäuse 12 ist ein handelsüblicher Barcode-Scanner 36 angeordnet. Der Scanner 36 dient als Lesegerät und liest die im Barcode gespeicherten Daten ein. Diese Daten umfassen im vorliegenden Ausführungsbeispiel eine Identifikationsnummer. Der Identifikationsnummer ist eine Probenart, z.B. Blut oder Urin und ein Probenvorbereitungsverfahren zugeordnet. Der Scanner 36 überträgt die Position, d.h. die Winkellage der Aufnahme 16 im Karussell 14 und die Identifikationsnummer an die Steuerung. Anhand der Identifikationsnummer ermittelt die Steuerung die erforderlichen Probenvorbereitungsschritte und steuert die einzelnen Stationen entsprechend an.

Die Proben in den Probenbehältern 18 können die Stationen in der Reihenfolge ihrer Positionen anfahren. Es gibt jedoch Fälle, wo einzelne Stationen nicht angefahren werden müssen, eine Station bereits besetzt ist oder eine Probe mit höherer Priorität behandelt werden soll. Zu diesem Zweck kann der Probenbehälter mit Greifarmen 40 der Zentrifuge 22 in eine andere Aufnahme 16 versetzt werden. Die Greifarme 40 sind zu diesem Zweck radialbeweglich. Sie werden mit dem Antrieb aus einer mitrotierenden Halterung 41 ausgefahren. Sie können bis zum Karussell ausgefahren werden. Am Ende der Greifarme 40 sitzt ein zangenartiger Greifer 42, mit dem die Probenbehälter 18 ergriffen und gehalten werden können. Für jeden Greifarm 40 und jeden Greifer 42 sind geeignete Antriebe mit Schleifkontakten für die Energieversorgung vorgesehen. Durch langsame Rotation der Zentrifuge 22 kann ein Probenbehälter 18 von einer Aufnahme in eine andere Aufnahme 16 bewegt werden.

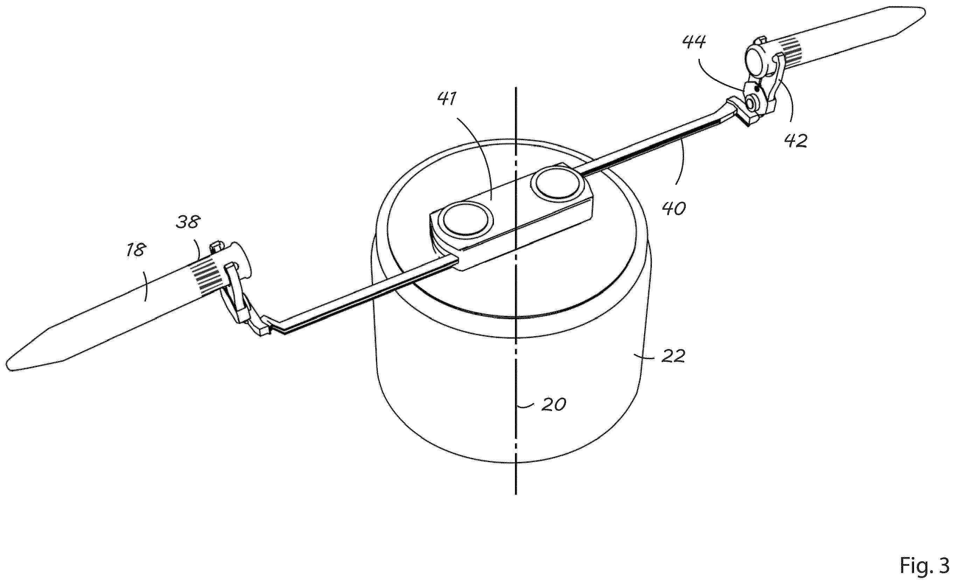

Im vorliegenden Ausführungsbeispiel wurden zwei Greifarme 40 an der Zentrifuge 22 dargestellt. Es ist aber auch denkbar, mehrere Paare mit gegenüberliegenden Greifarmen 40 vorzusehen. In jedem Fall hat die Zentrifuge 22 eine Doppelfunktion: zum einen kann wie bei herkömmlichen Zentrifugen auch, eine Probe zentrifugiert werden. Dies ist in Figur 3 dargestellt. Zum anderen ist die Zentrifuge 22 genau steuerbar und dient zum Überführen eines Probenbehälters 18 von einer Aufnahme 16 in eine andere. Zum Zentrifugieren rotiert die Zentrifuge sehr schnell. Dabei entstehen Fliehkräfte und die Feststoffe in der Probe werden nach außen an den Boden des Probenbehälters gedrückt. Die Greifer 42 sind an die Greifarme 40 angelenkt. Auf diese Weise kann der Probenbehälter 18 während des Zentrifugierens eine annähernd horizontale Position einnehmen. Dies ist in Figur 3 dargestellt.

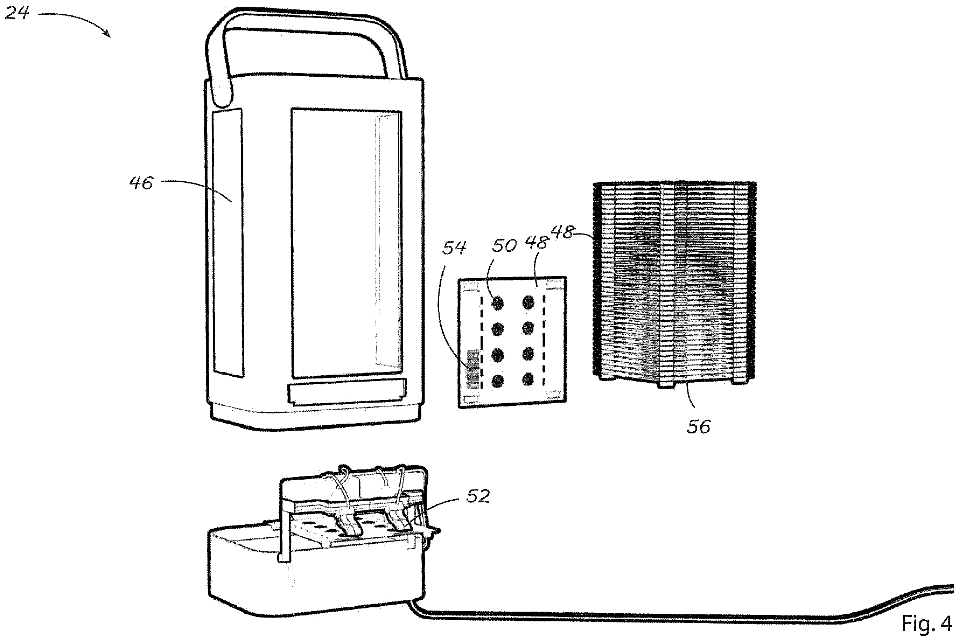

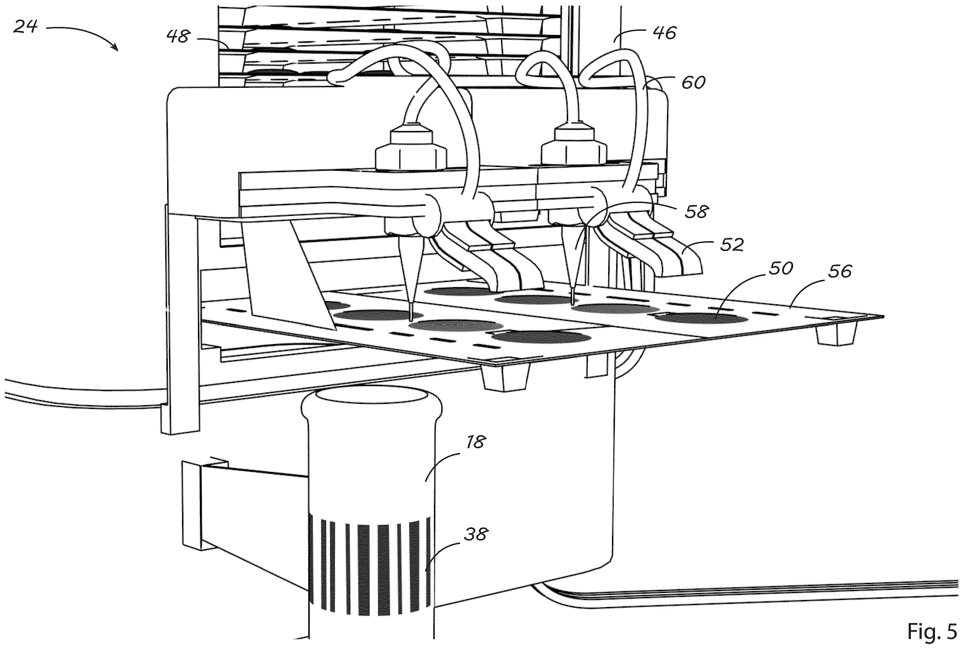

Figur 4 und Figur 5 zeigen das Probeneintragssystem 24. Das Probeneintragssystem 24 umfasst ein abnehmbares und austauschbares Gehäuse 46. Das Gehäuse 46 bildet einen Turm in dem blattförmige Probenträger 48 stapelförmig gelagert sind. Zwischen den Probenträgern sind Abstandshalter vorgesehen. Auf den Probenträgern 48 befinden sich getrocknete Proben 50. Ein Beispiel für eine solche getrocknete Probe ist ein getrockneter Tropfen Blut. Die Proben befinden sich an definierten Stellen, die markiert sind, so dass die Probe bei der Probennahme direkt auf diese Stelle aufgebracht werden kann.

Jeder Probenträger 48 ist mit einem Barcode 54 versehen. Der Barcode 54 wird mit einem üblichen Barcode-Scanner 52 oder einer Kamera ausgelesen. Die Daten werden an die Steuerung für die Nachverfolgung übertragen. Bei mehreren Proben können auch mehrere Barcodes vorgesehen sein. Mit dem gleichen Scanner 52 wird ferner die genaue Position der Proben 50 auf dem Probenträger 56 ermittelt. Der Scanner 52 arbeitet mit verschiedenen Wellenlängen des Spektrums und kann so auch die Art der Probe erfassen. Proben mit unerwünschtem oder unbekanntem Erscheinungsbild können vom Eintrag ausgeschlossen werden um eine Verunreinigung der Anordnung zu vermeiden. Es ist auch möglich, die Position mit einem weiteren Scanner zu ermitteln oder eine voreingestellte Position zu verwenden.

Der unterste Probenträger 56 wird in den Bereich oberhalb eines Probenbehälters 18 bewegt. Hierzu ist im Probeneintragssystem 24 ein geeigneter Antrieb (nicht dargestellt) vorgesehen. Der Antrieb ist als x-y-Antrieb ausgebildet, auf dem die Halterung für die Probenträger befestigt ist. Der Antrieb erlaubt somit nicht nur eine horizontale Bewegung der Probenträgers 56 senkrecht zum Gehäuse 46, sondern auch lateral dazu in horizontaler Richtung parallel zur vorderen Gehäusewandung.

An der vorderen Gehäusewandung des Gehäuses 46 ist eine Hochdruckdüse 58 gehalten. Dies ist in Figur 5 dargestellt. Die Hochdruckdüse 58 ist über eine Hochdruckleitung 60 mit einem Lösungsmittelreservoir verbunden. Mit einer Pumpe (nicht dargestellt) kann ein Hochdruckstrahl erzeugt werden. Der Hochdruckstrahl tritt über die Hochdruckdüse 58 in Richtung des Probenträgers 56 aus. Der Hochdruckstrahl ist so bemessen, dass der Probenträger 56 dadurch geschnitten wird. Durch geeignete Bewegung des Probenträgers 56 wird der unter der Hochdruckdüse 58 befindliche Teil ausgeschnitten. Die Steuerung der Bewegung erfolgt durch die gemeinsame Steuereinheit. Im vorliegenden Ausführungsbeispiel wird die Probe 56 nur teilweise ausgeschnitten. Anschließend wird die Probe 50 mit dem Lösungsmittel vom Probenträger 56 in den Probenbehälter 18 abgespült. Zum Abspülen ist ein Sprühkopf vorgesehen, der ebenfalls mit Hochdruckfluid beaufschlagt ist. Alternativ wird der gesamte Bereich des Probenträgers 56 ausgeschnitten und die Probe 50 fällt mit dem darunter befindlichen Teil des Probenträgers 56 in den Probenbehälter 18.

Das Lösungsmittel ist ein Lösungsmittel, das ohnehin im weiteren Verfahren zur Probenvorbereitung verwendet wird. Es braucht also nicht mehr aufwändig aus dem Probenbehälter entfernt werden.

Je nach Anwendungsfall und Art der Probenträger können mehrere Proben gleichzeitig ausgeschnitten werden. Im vorliegenden Ausführungsbeispiel werden jeweils zwei benachbarte Proben 50 mit zwei nebeneinander angeordneten Hochdruckstrahlen ausgeschnitten. Zu diesem Zweck sind zwei Hochdruckdüsen 58 an dem Gehäuse 46 vorgesehen.

Bei einem alternativen, nicht dargestellten Ausführungsbeispiel wird nicht der Probenträger 56, sondern die Hochdruckdüse bewegt. Es wird jedoch immer das gleiche Ergebnis erreicht.

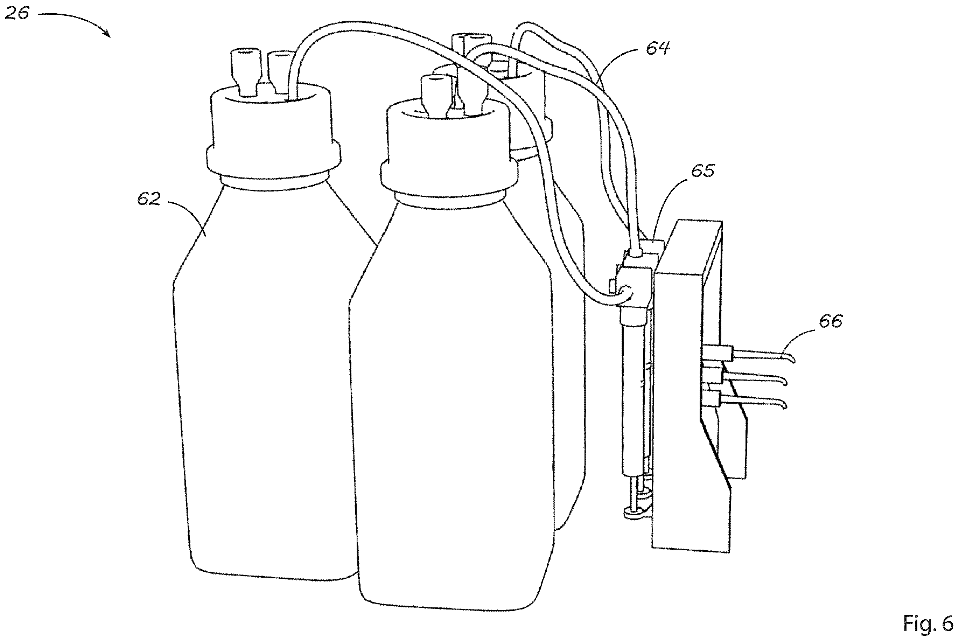

Figur 6 zeigt drei Dosiersysteme 26 zum Dosieren von Reagenzien zur Probenvorbereitung aus einem Reservoir 62. Ein Beispiel für ein Reagenz ist ein Fällmittel zum Ausfällen von störenden Teilen der Probenmatrix. Es können aber auch Lösungs- oder Verdünnungsmittel zugesetzt werden, wenn dies für die Analyse sinnvoll ist. Das Reagenz befindet sich in einem Reservoir 62. Jedes der drei Reservoire 62 ist über eine Schlauchverbindung 64 mit einer Dosierpumpe verbunden. Die Dosierpumpe wird von der Steuereinheit gesteuert. Das Reagenz aus dem Reservoir 62 wird mit dem ausgewählten Volumen über einen Dosierausgang 66 in den darunter befindlichen Probenbehälter 18 dosiert. Die drei Dosierausgänge 66 sind in Figur 6 zu erkennen.

Im vorliegenden Ausführungsbeispiel sind drei Dosiersysteme 26 vorgesehen, die gleichzeitig arbeiten können. Auf diese Weise kann das gleiche Reagenz in drei Probenbehälter gleichzeitig dosiert werden. Dadurch wird ein hoher Durchsatz erreicht. Es ist aber je nach Anwendung auch möglich, verschiedene Reagenzien für verschiedene Anwendungsfälle oder Probenvorbereitungen zu verwenden.

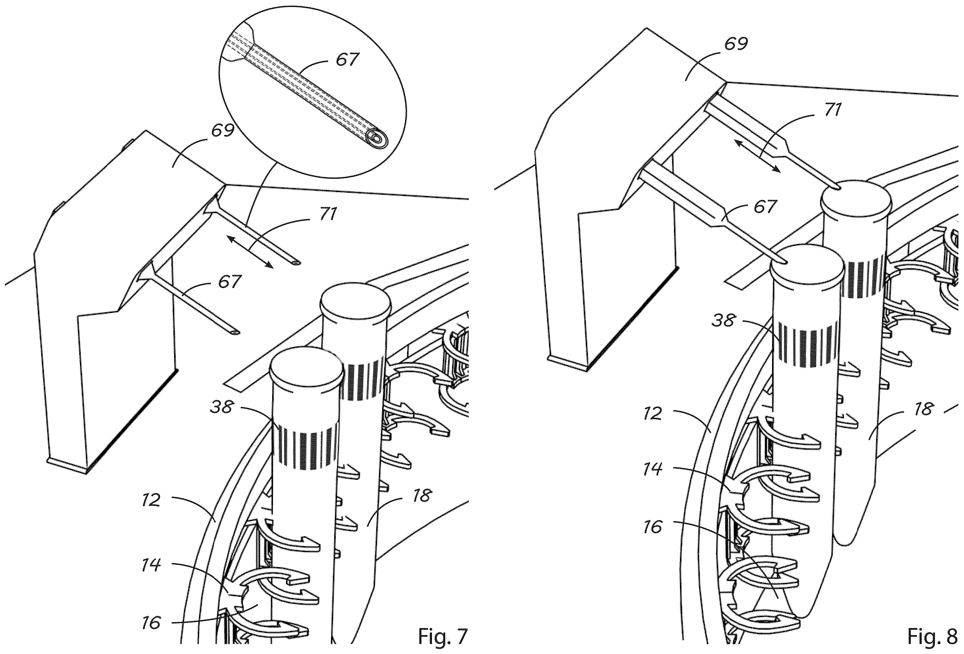

Figuren 7 und 8 zeigen, wie unerwünschtes Lösungsmittel aus der Probe ausgetrieben wird. Ein neutrales Gas, im vorliegenden Fall unter Druck stehendes Stickstoffgas, wird mittels einer Nadel 67 in die Probe eingeführt. Lösungsmittel, das in der Probe vorhanden ist, wird dabei ausgelöst und nach außen abgegeben. Die Nadel 67 ist aus einer Ruheposition, die in Figur 7 gezeigt ist, in eine Betriebsposition beweglich. Die Betriebsposition ist in Figur 8 dargestellt. Die Bewegungsrichtung ist durch einen Pfeil 71 repräsentiert. In der zugehörigen Halterung 69 ist ein geeigneter Antrieb angeordnet. Im vorliegenden Ausführungsbeispiel sind zwei Nadeln 67 zum Austreiben von Lösungsmittel vorgesehen. Eine Stickstoff-Versorgungsleitung wird von dem äußeren Rand des Karussells durch die Folie getrieben. Eine zweite Nadel dient zum Entsorgen von Abgasen. Gas wird zugeführt und formt im Probenbehälter einen Zyklon. Dabei verdampft das Lösungsmittel und tritt durch die zweite Nadel aus.

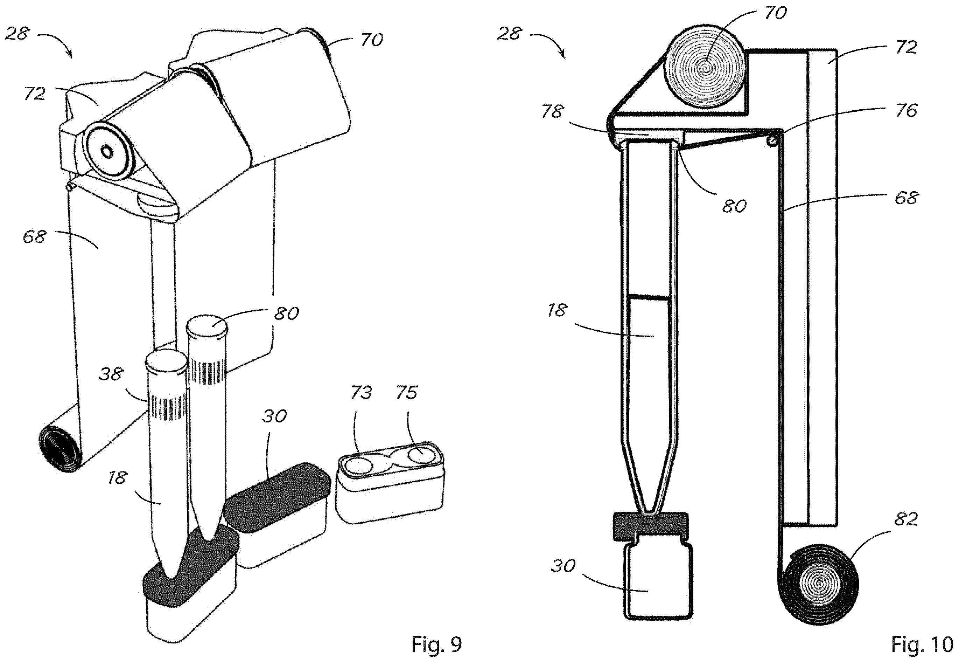

Figur 9 und 10 zeigen zwei Folienspender 28 zum Verschließen eines in einer Aufnahme im Karussell befindlichen Probenbehälters mit einer Folie 68. Figur 10 ist ein Querschnitt durch den Folienspender 28. Die Folie 68 wird von einer Folienrolle 70 oberhalb des Probenbehälters 18 abgerollt. Die Folienrolle 70 wird an einem Halter 72 gehalten. Der Halter 72 weist einen radial nach vorne ragenden Arm 74 auf. Die Folie 68 wird über den Arm 74 und eine Umlenkrolle 76 nach unten geführt. Dabei wird die Folie 68 in horizontaler Richtung zwischen einem Stempel 78 und dem oberen Rand 80 des Probenbehälters 18 gespannt. Der Stempel 78 hat im Wesentlichen die Abmessungen des oberen Randes 80 des Probenbehälters 18. Der obere Rand 80 des Probenbehälters 18 ist abgerundet, damit die Folie nicht reist. Im Inneren des Stempels 78 ist eine Heizung (nicht dargestellt) angeordnet, deren Temperatur von der Steuerung eingestellt wird. Die Heizung wird von einer Glühwendel gebildet, die in einer Patrone angeordnet ist.

Zum Verschließen des Probenbehälters 18 wird ein Stück unverbrauchter Folie abgezogen. Hierzu ist am unteren Ende der Folie eine Rolle 82 mit einem (nicht dargestellten) Antrieb vorgesehen. Die unverbrauchte Folie befindet sich zwischen Stempel 78 und Rand 80. Anschließend wird der Halter 72 mit dem Arm 74 und dem daran befindlichen, beheizten Stempel 78 nach unten bewegt. Hierfür ist ein Antrieb (nicht dargestellt) vorgesehen. Der Antrieb wird von der Steuerung gesteuert. Durch den entstehenden Druck und die erhöhte Temperatur wird die Folie auf den Rand aufgeschmolzen. Dabei löst sich die Folie im Bereich des Probenbehälters aus dem Rest der Folie 68 ab. Der Probenbehälter 18 ist dicht versiegelt. Das Aufschmelzen erfolgt in einer Weise, die ein Eindringen von Dämpfen in den Probenbehälter vermeiden.

Je nach Anwendung kann der Probenbehälter 18 weiter nach unten gedrückt werden. Unterhalb des Probenbehälters 18 und des Stempels 78 ist die Vortex-Station 30 angeordnet. Bei Ausübung von Druck auf den Probenbehälter 18 wird eine Vortex-Bewegung ausgeführt. Die Probe in dem Probenbehälter 18 wird durchmischt.

Je nach erwünschtem Probendurchsatz können mehrere Folienspender 28 nebeneinander angeordnet werden. Dann können mehrere Probenbehälter 18 gleichzeitig verschlossen werden. Alternativ werden lediglich mehrere Stempel verwendet, die mehrere Probenbehälter 18 gleichzeitig mit einer breiteren Folie 68 verschließen. Im vorliegenden Ausführungsbeispiel werden zwei Folienspender 28 mit zwei Folien verwendet (s. Figur 1 und 9).

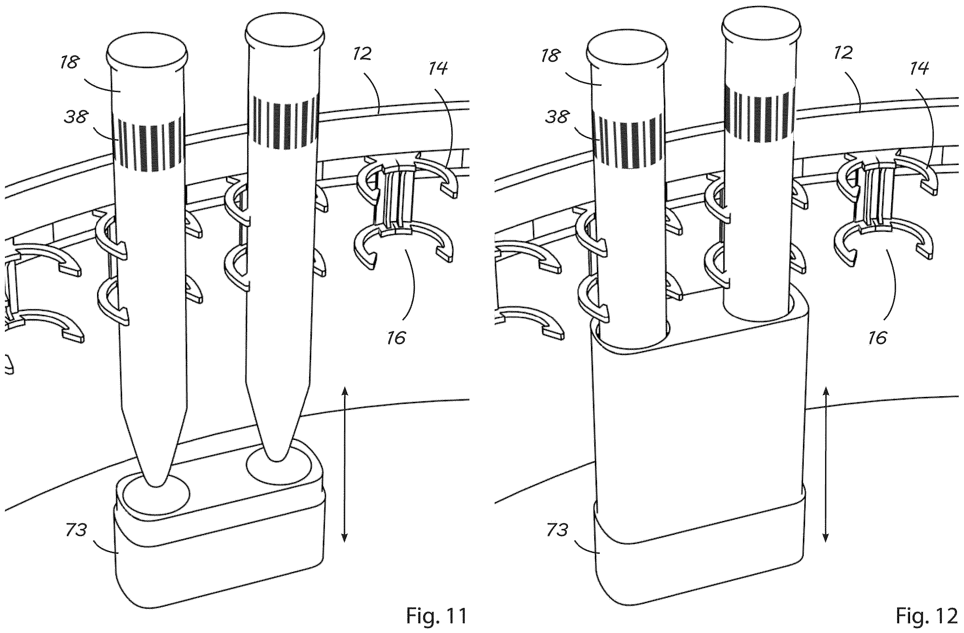

Neben der Vortex-Station 30 ist eine Heizung 73 angeordnet. Dies ist in Figur 11 dargestellt. Die Heizung 73 weist ein Gehäuse mit zwei Aufnahmen 75 auf. Die Heizung 73 ist in vertikaler Richtung beweglich angeordnet. Hierfür ist ein von der Steuerung kontrollierter Antrieb (nicht dargestellt) vorgesehen. Das Gehäuse der Heizung 73 wird nach oben gefahren. Dabei umschließen die Aufnahmen 75 den unteren Bereich der darüber angeordneten Probenbehälter 18 und können diese beheizen. Diese Situation ist in Figur 12 dargestellt.

Zum Abtrennen von Feststoffen werden zwei der Probenbehälter 18 mit gegenüberliegenden Greifarmen 40 der Zentrifuge 22 ergriffen und rotiert.

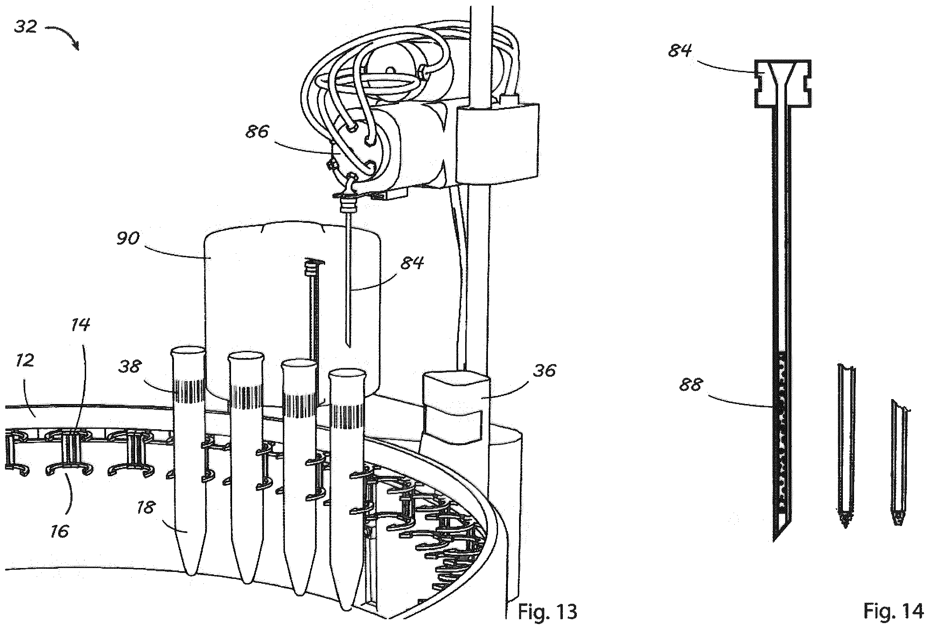

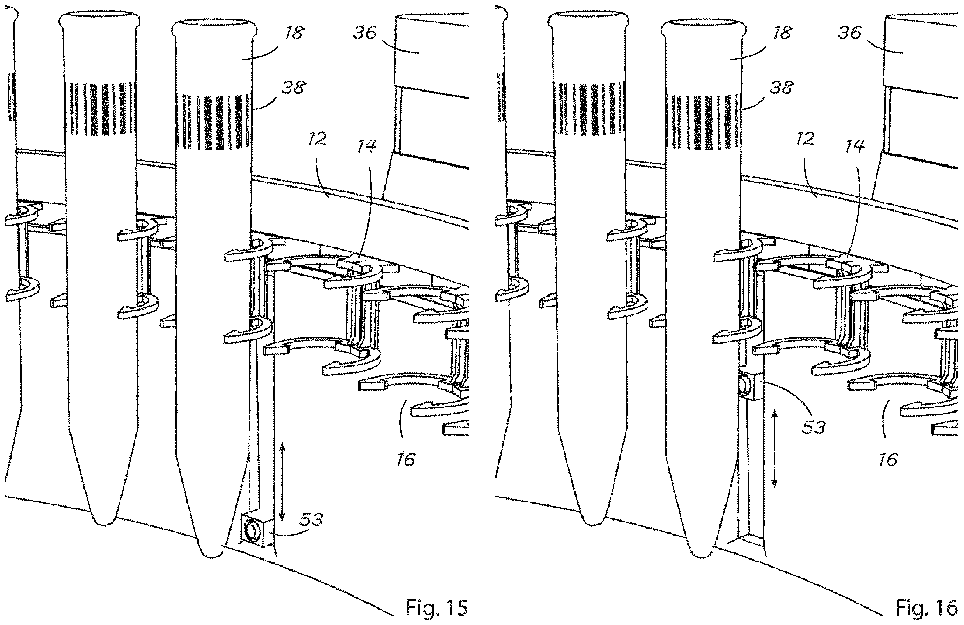

Zum Entnehmen der Probe und Überführen in das Analysengerät ist die Probenentnahme-Einrichtung 32 vorgesehen. Dies ist in Figur 13 dargestellt. Die Probenentnahme-Einrichtung 32 umfasst eine Hohlnadel 84 an einem beweglichen, konischen Kopf 86. Der Kopf 86 ist an einer Stange befestigt und dort auf- und ab beweglich. Hierzu ist ein geeigneter Antrieb (nicht dargestellt) vorgesehen, der von der Steuerung gesteuert wird. Zum Entnehmen der Probe wird der Probenbehälter 18 unter den Bereich der Hohlnadel 84 bewegt. Anschließend wird die Hohlnadel 84 nach unten bewegt, bis sie in die Probe eintaucht. Die Eintauchtiefe wird von einer vertikal beweglichen Videokamera 53 mit Bildverarbeitung kontrolliert, so dass die Eintauchtiefe unabhängig von der Höhe des Feststoffanteils immer auf der Hälfte der Flüssigkeit liegt. Figur 15 zeigt die Videokamera 53 in einer unteren Stellung. Figur 16 zeigt die Videokamera 53 in einer oberen Stellung. In der Hohlnadel 84 befindet sich Filtermaterial 88. Dies ist in Figur 14 zu erkennen. Bei einer ersten Variante (links in der Darstellung) steckt das Filtermaterial einfach in der Nadel. Bei einer zweiten, alternativen Variante (in der Darstellung in der Mitte) ist der Filter unten an das Nadelmaterial, etwa ein Polymer oder Metall, angesintert. Bei einer dritten, alternativen Variante (rechts in der Darstellung) ist die Nadel 88 von unten aufgebohrt, so dass sich ein Bereich geringerer Wandstärke ergibt. Das Filtermaterial wird in diesen Bereich eingeführt und der untere Teil der Nadel zugekrimpt.

Wenn nun etwas Probenflüssigkeit in die Hohlnadel 84 eingesaugt wird, bleiben Feststoffpartikel und Schwebeteilchen im Filtermaterial 88 hängen. Hierzu ist eine Kolbenpumpe 114 vorgesehen. Die so vorbereitete Probe kann direkt in eine HPLC Säule oder ein anderes Analysegerät eingebracht werden.

Für jede Probe wird eine frische Nadel mit unverbrauchtem Filtermaterial verwendet. Diese befinden sich in einem Depot 90 mit einem Auswerfer. Bevor also eine weitere Probe entnommen werden kann, wird die verbrauchte Nadel gelöst und eine frische Nadel am Kopf befestigt.

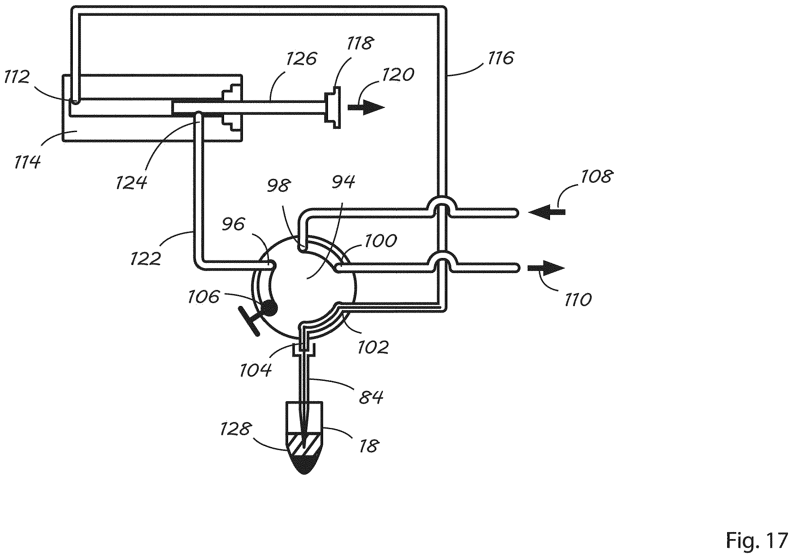

Mit der Probenentnahme-Einrichtung 32 wird die Probe aus dem Probenbehälter 18 in das Analysengerät überführt. Im vorliegenden Ausführungsbeispiel wird eine Chromatographiesäule (nicht dargestellt) zur Analyse verwendet. Hierzu ist ein Drehventil 94 mit 6 Anschlüssen 96, 98, 100, 102, 104 und 106 vorgesehen. An das Drehventil ist ein Messgerät, eine Pumpe und die Filternadel angeschlossen. Dies ist in Figur 17 bis 19 dargestellt.

Am Anschluss 98 wird Laufmittel aus einer Laufmittelquelle zugeführt. Dies ist durch einen Pfeil 108 repräsentiert. Anschluss 100 führt zu einer Chromatographiesäule. Im vorliegenden Ausführungsbeispiel wird eine nicht dargestellte HPLC-Säule eingesetzt. Dies ist durch einen Pfeil 110 repräsentiert. Anschluss 102 ist über eine Leitung 116 mit einem Anschluss 112 eines Kolbensystems 114 verbunden. Das Kolbensystem 114 wird mit einem Schrittmotor 118 betrieben. Dies ist durch einen Pfeil 120 repräsentiert. Anschluss 96 ist über eine Leitung 122 mit einem zweiten Anschluss 124 des Kolbensystems 114 verbunden.

Figur 17 zeigt die Ventilstellung, bei der die Nadel 84 in die im Probenbehälter 18 befindliche Probenflüssigkeit getaucht wird. In dieser Stellung wird Laufmittel in die HPLC-Säule gepumpt. Der Kolben 126 des Kolbensystem 114 wird mit dem Schrittmotor 118 in Richtung des Pfeils 120 bewegt. Dabei wird ein wohl definiertes Volumen an Probenflüssigkeit 128 durch die Nadel 84 zum Anschluss 104 und über den Anschluss 102 in die als Schleife ausgebildete Leitung 116 aufgezogen. Dabei werden das Totvolumen der Nadel und des Ventils berücksichtigt.

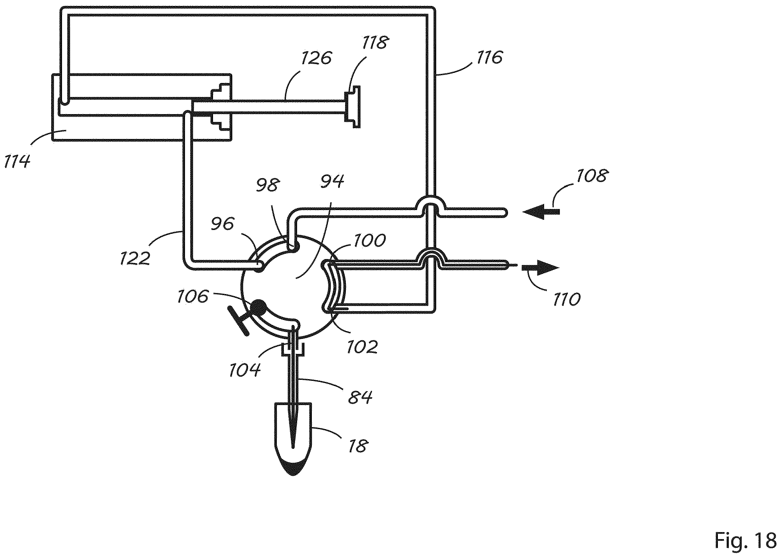

Anschließend wird das Ventil in die in Figur 18 gezeigte Stellung gebracht. Die in der Schleife 116 befindliche Probe ist nun über den Anschluss 102 mit dem Anschluss 100 und somit mit dem Ausgang zur HPLC-Säule verbunden. Bei Bewegung des Kolbens 126 nach links in der Darstellung wird die Probe zur HPLC-Säule gepumpt. Gleichzeitig fließt Laufmittel durch den Anschluss 98 zum Anschluss 96 und durch die Leitung 122 zum Kolbensystem 114.

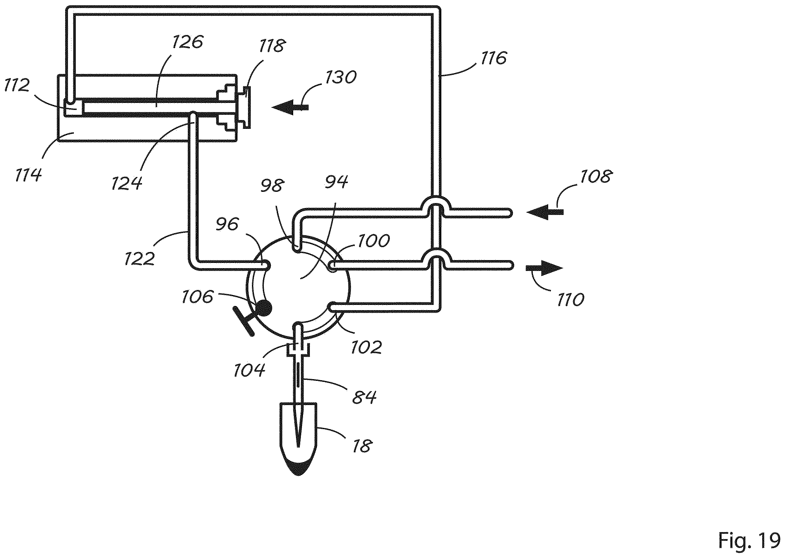

Zum Spülen wird das Ventil wieder zurück gestellt, wie dies in Figur 19 dargestellt ist. Der Kolben wird 126 in Richtung des Pfeils 130 bewegt. Dabei wird im System befindliches Laufmittel über die Leitung 116 durch die Anschlüsse 102 und 104 zur Nadel 84 geleitet. Probenreste werden mitgenommen und in den Probenbehälter 18 gespült. Das Laufmittel fließt durch die in dieser Stellung miteinander verbundenen Anschlüsse 98 und 100 in die HPLC-Säule und spült diese ebenfalls.

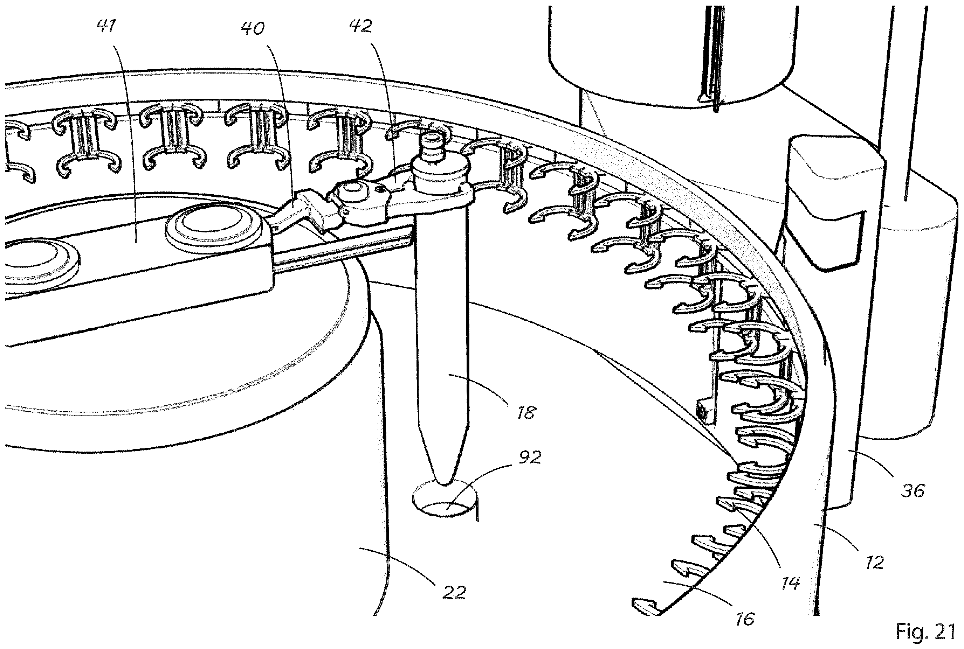

Nach der Entnahme der Probe und Spülen des Ventils wird die Nadel 84 über dem Probenbehälter gelöst und der Probenbehälter 18 mit einem Greifarm 40 der Zentrifuge 22 ergriffen und in eine Öffnung 92 im Boden des Gehäuses 12 befördert, indem die Greifer 42 oberhalb der Öffnung 92 öffnen. Dies ist in Figur 21 dargestellt. Unterhalb der Öffnung 92 befindet sich ein Abfallbehälter, der die verbrauchten Probenbehälter 18 mit der Spülflüssigkeit aufnimmt. Gleichzeitig wird eine neue Nadel aufgesetzt.

Mit Bewegung des Kolbens nach rechts in der Darstellung kann die nächste Probe aufgesaugt und der Zyklus wiederholt werden.

Die Steuerung sitzt gemeinsam mit der Stromversorgung und den erforderlichen elektronischen Komponenten in einem belüfteten und gegen Chemikalien und Dämpfe abgeschirmten Gehäuse, beispielsweise neben oder unterhalb des Gehäuses 12. Mit der Steuerung können Proben höherer Priorität schneller durch die Probenvorbereitung geleitet werden, auch wenn das System bereits von anderen Proben besetzt ist. Ein Sensor kann leere Positionen im Karussell identifizieren, zählen und an die Steuerung melden. Bei der Bestückung kann der Nutzer die Anzahl der benötigten Positionen mit der zugehörigen Priorität eingeben. Diese werden dann von der Steuerung entsprechend berücksichtigt. Proben, deren Inhalt vom System in der aktuellen Konfiguration, beispielsweise einer Säulenkonfiguration, nicht analysierbar ist, werden unbehandelt wieder zurückgegeben. Auf diese Weise wird eine übermäßige Kontamination vermieden.

Mit der Steuerung werden die Temperaturen im Stempel und in der Heizung Rotationsgeschwindigkeit und Anlenkwinkel an der Zentrifuge, Dosiervolumen und Art und Reihenfolge der Probenvorbereitungsschritte eingestellt. Die Steuerung wertet die Signale der Sensoren, Kameras und Scanner aus.

## Patentansprüche

1. Anordnung zum Aufnehmen von Probenflüssigkeit aus einem Probenbehälter und Zuführen in ein Analysegerät, enthaltend:
(a) eine Saugvorrichtung; und
(b) eine mit der Saugvorrichtung verbundene Pipette oder Nadel;
**dadurch gekennzeichnet, dass**
(c) die Pipette oder Nadel im Inneren mit einem Filter versehen ist;
(d) ein Depot für eine Vielzahl von unbenutzten Pipetten oder Nadeln vorgesehen ist; und
(e) Mittel zum Austauschen der Pipette oder Nadel nach dem Aufnehmen von Probenflüssigkeit und Zuführen in ein Analysengerät gegen eine unbenutzte Pipette oder Nadel aus dem Depot.

2. Anordnung nach Anspruch 1, **gekennzeichnet durch** eine Videokamera mit bildauswertenden Mitteln oder andere optische Mittel zur Erfassung der Tiefe des flüssigen Überstands oberhalb von Feststoff im Probenbehälter und Mittel zum Steuern der Eintauchtiefe eines an der Probenentnahme-Einrichtung vorgesehenen Endes nach Maßgabe der Tiefe des flüssigen Überstandes.

3. Anordnung nach einem der vorgehenden Ansprüche, **dadurch gekennzeichnet, dass** eine Schnittstelle zum Anschließen einer HPLC-Säule, Gaschromatographiesäule oder eines anderen Analysegerätes hinter der Probenentnahme-Einrichtung vorgesehen ist.

4. Pipette oder Nadel zur Verwendung in einer Anordnung nach einem der vorgehenden Ansprüche, **dadurch gekennzeichnet, dass** im Inneren ein durch ein Sinterverfahren angesinterter Filter oder ein anderer Filter vorgesehen ist.

5. Pipette oder Nadel nach Anspruch 4, **dadurch gekennzeichnet, dass** die Pipette oder Nadel im Bereich des Filters eine Wandung veringerter Wandstärke aufweist und der Filter ein Filtermaterial im Bereich der Wandung verringerter Wandstärke aufweist und die darunterliegende Öffnung zugekrimpt ist.

6. Probeneintragssystem zum Einbringen einer auf einem blattförmigen Probenträger vorliegenden Probe in einen leeren oder vorbereiteten Probenbehälter mit Mitteln zum Schneiden des blattförmigen Probenträgers, **gekennzeichnet durch**
(a) eine Düse;
(b) eine an die Düse angeschlossene Hochdruckfluidquelle; und
(c) Mittel zum Steuern einer Bewegung der Düse und/oder des Probenträgers derart, dass ausgewählte Bereiche des blattförmigen Probenträgers ausgeschnitten werden.

7. Probeneintragssystem nach Anspruch 6, **dadurch gekennzeichnet, dass** das Hochdruckfluid wenigstens ein Fluid enthält, welches in einem nachfolgenden Probenvorbereitungs- und/oder Messverfahren verwendet wird.

8. Probeneintragssystem nach Anspruch 6 oder 7, **dadurch gekennzeichnet, dass** die Stelle des Probenträgers mit der Probe vollständig ausgeschnitten und in den Probenbehälter überführt wird oder teilweise ausgeschnitten und Mittel vorgesehen sind, mit denen der ausgeschnittene Teil nach unten in den Bereich des Probenbehälters geklappt wird, und Mittel zum Abspülen der Probe vom Probenträger mit dem Fluid aus der Hochdruckfluidquelle in den Probenbehälter.

9. Probeneintragssystem nach Anspruch 8, **dadurch gekennzeichnet, dass** die Mittel zum Abspülen der Probe einen Sprühkopf umfassen, mit dem das Fluid aus der Hochdruckfluidquelle auf die Probe aufgesprüht wird.

10. Probeneintragssystem nach einem der vorgehenden Ansprüche 6 bis 9, **dadurch gekennzeichnet, dass** ein Scanner vorgesehen ist, mit welchem die Farbe, der Trocknungsgrad, die Lage der Probe, die Ausdehnung der Probe und/oder andere optische detektierbare Eigenschaften der Probe erfassbar ist.

11. Probeneintragssystem nach einem der vorgehenden Ansprüche 6 bis 10, **dadurch gekennzeichnet, dass** ein Gehäuseturm mit einer Öffnung an seinem unteren Ende und einer oberen Öffnung vorgesehen ist, in dem die Probenträger mit Abstandshaltern in gestapelt ablegbar sind, und Mittel zum Bewegen eines Probenträgers aus der Öffnung am unteren Ende des Gehäuseturms in den Bereich der Düse.

12. Anordnung nach einem der vorgehenden Ansprüche, **gekennzeichnet durch** ein Lesegerät zum Auslesen von Identifikationsdaten und/oder Daten zur Probe und/oder durchzuführenden Probenvorbereitung aus einem Barcode, RFID-Speicher oder einem anderen an der Probe oder dem Probenbehälter vorgesehenen Datenspeicher.

13. Anordnung (10) zur Vorbereitung einer Vielzahl von Proben für ein analytisches Verfahren, enthaltend
(a) ein Karussell (14) mit einem festen Gehäuse (12) und beweglichen Aufnahmen (16) für Probenbehälter (18);
(b) eine Steuerung zur Steuerung der Aufnahmen (16) in dem Karussell (14); und
(c) eine Probenentnahme-Einrichtung (24) zur Bereitstellung der Probe für das analytische Verfahren;
**dadurch gekennzeichnet, dass**
(d) eine oder mehrere Stationen (24, 26, 28, 30, 32) zur Probenvorbereitung an dem Karussell (14) vorgesehen sind, an denen die Aufnahmen (16) für Probenbehälter (18) des Karussells (14) positionierbar sind;
(e) eine Zentrifuge (22) mit paarweise gegenüberliegenden Aufnahmen (42) für Probenbehälter (18) vorgesehen ist, und
(f) die Aufnahmen (42) für Probenbehälter (18) an der Zentrifuge (22) beweglich angeordnet sind und die Bewegungen derart steuerbar sind, dass eine Überführung eines Probenbehälters (18) zwischen einer Aufnahme (16) im Karussell (14) und einer Aufnahme (42) in der Zentrifuge (22) bewirkbar ist,
(g) wobei die Steuerung durch die gleiche Steuerung erfolgt, die auch zur Steuerung des Karussells (14) vorgesehen ist.

14. Anordnung nach Anspruch 13, **gekennzeichnet durch** ein Probeneintragssystem (24) nach einem der Ansprüche 6 bis 11.

15. Anordnung nach Anspruch 13 oder 14, **dadurch gekennzeichnet, dass** die Probenentnahme-Einrichtung zur Bereitstellung der Probe für das analytische Verfahren von einer Anordnung zum Aufnehmen von Probenflüssigkeit aus einem Probenbehälter und Zuführen in ein Analysegerät nach einem der Ansprüche 1 bis 5 gebildet ist.
